# EUROPEAN PATENT APPLICATION

(11) **EP 3 282 158 A1**
(43) Date of publication of application: **14.02.2018**
(21) Application number: 17184900.3
(22) Date of filing: 04.08.2017
(51) Int. Cl.: F16K 11/20, F16K 11/22, F16L 41/16, F16K 27/07

(54) **FLOW CONTROL VALVE**

(30) Priority: 09.08.2016 IT 201600083615
(71) Applicant: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(57) **Abstract**

A flow control valve (1), comprising a hollow valve body (11) that extends along a main direction of extension (100) and has at least two open tubular portions (12, 13) for connection to a respective section of conduit, a flow control element (2) accommodated in the hollow valve body (11) and movable between at least one position for permitting flow and a position for stopping flow, and a first shank (3) for moving the flow control element (2) which can be actuated using an actuation element; the flow control element (1) defines, in the hollow valve body (11), at least one filling and/or emptying opening (20) that is connected with the interior of the hollow valve body (11), and which accommodates a cut-off which is adapted to open/close the at least one filling and/or emptying opening (20).

## Description

The present invention relates to a flow control valve, particularly adapted for use on boilers and/or in heating and/or plumbing systems in general.

Typically, in boilers, or in heating systems in general, there are, along circuits passed through by the fluid, valves for filling and emptying (or loading/draining) which are occasionally connected to conduits so as to allow the loading or the draining of the fluid into and out of the system.

In conventional solutions, along the conduits there are transverse openings on which to attach filling and/or emptying valves.

This entails not only the need to manage a rather large number of components (conduits, flow control valves, filling and/or emptying valves) but also a certain laboriousness in the installation of the system.

Furthermore, the need to attach the filling and/or emptying valves transversely to the conduits makes the overall system rather unwieldy, in some cases comprising the ease of access and of intervening in it should the need arise.

The aim of the present invention is to solve the above mentioned problems and overcome the drawbacks, by providing a flow control valve that makes it possible to simplify the installation operations.

Within this aim, an object of the present invention is to provide a flow control valve that is extremely compact and has a very low implementation cost, so as to make its use advantageous from an economic viewpoint as well.

This aim and these and other objects which will become better apparent hereinafter are achieved by a flow control valve according to claim 1.

Further characteristics and advantages of the invention will become better apparent from the description of some preferred, but not exclusive, embodiments of a flow control valve according to the invention, which are illustrated by way of non-limiting example in the accompanying drawings wherein:

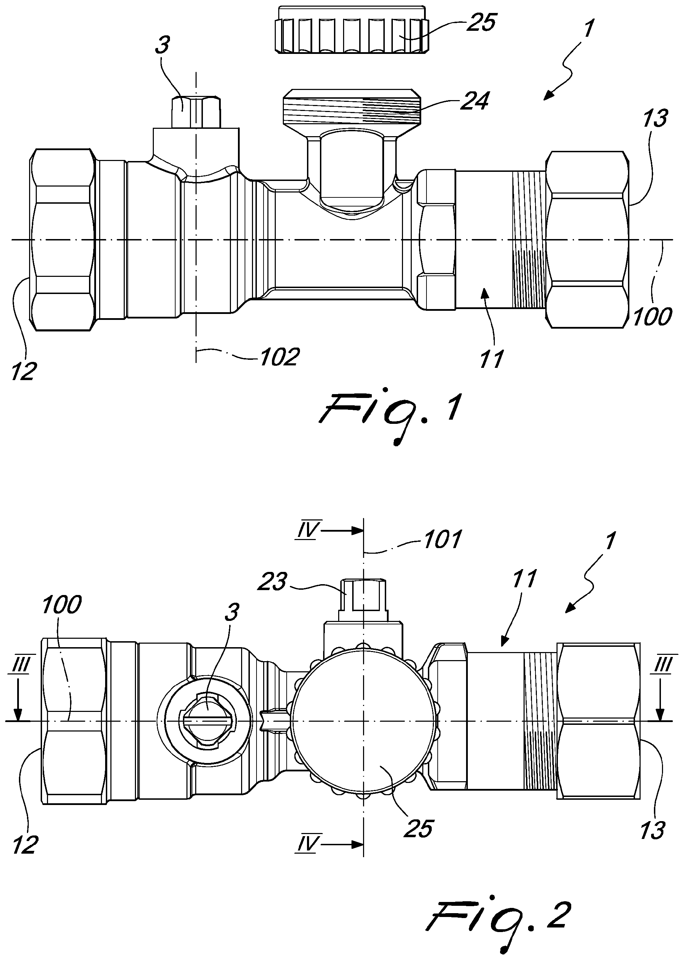

Figures 1 and 2 are side views of a flow control valve according to the invention;

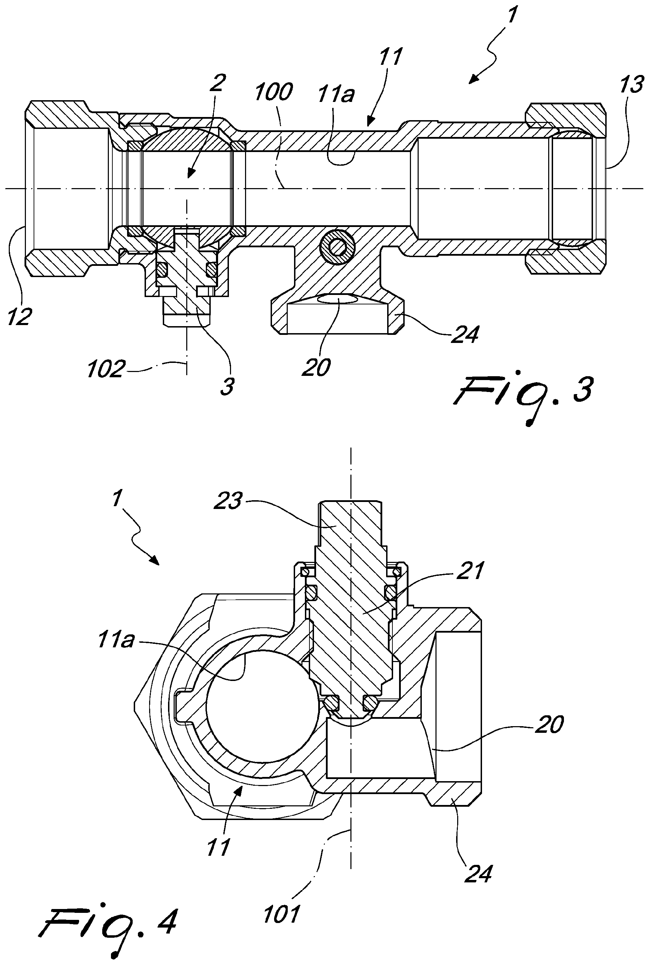

Figure 3 is a cross-sectional view taken along the line III-III of Figure 2;
Figure 4 is a cross-sectional view taken along the line IV-IV of Figure 2;

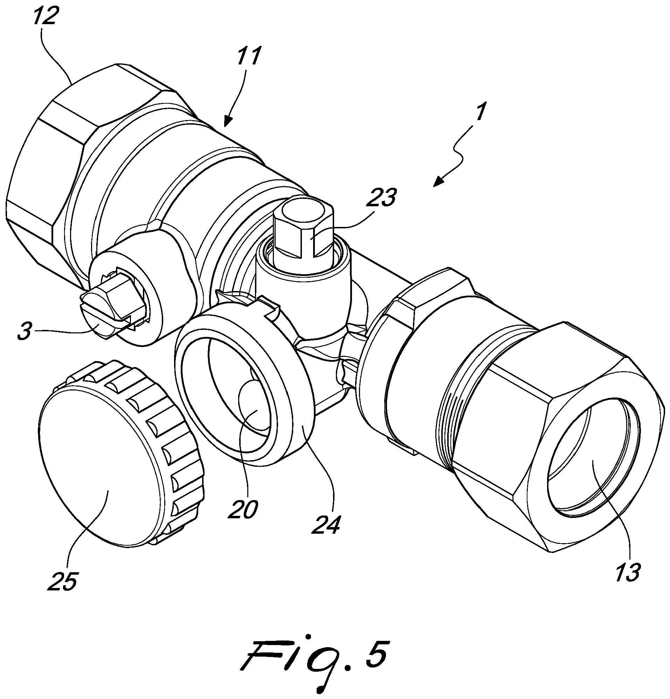

Figure 5 is a perspective view of a flow control valve according to the invention.

In the exemplary embodiments illustrated below, individual characteristics shown in relation to specific examples may in reality be interchanged with other, different characteristics, existing in other exemplary embodiments.

With reference to the figures, the present invention relates to a flow control valve, generally designated by the reference numeral 1, particularly for boilers or for heating systems in general.

The flow control valve 1 comprises a hollow valve body 11, which extends along a main direction of extension 100 and has at least two open tubular portions 12, 13 for connection to a respective section of conduit.

The flow control valve 1 further comprises a flow control element 2, which is accommodated in the hollow valve body 11 and can move between at least one position for permitting flow and a position for stopping flow.

Inside the hollow valve body 11, a longitudinal cavity 11 a is defined for connection between the two open tubular portions 12, 13.

Preferably, the flow control element 2 comprises a hollow ball flow control element.

The flow control valve 1 is further provided with a shank 3, which extends along a longitudinal axis 102, for moving the flow control element 2, the shank 3 being actuatable by way of an actuation element (not shown in the figures).

According to the present invention, in the hollow valve body 11 at least one filling and/or emptying opening 20 is defined and is connected to the interior of the hollow valve body 11, and a cut-off 21 is accommodated which is adapted to open/close the at least one filling and/or emptying opening 20.

The cut-off 21 is associated with an actuation body 23.

In particular, the cut-off 21 can move along a movement direction 101 arranged substantially tangentially to the inner surface of the hollow valve body 11 and at right angles to the main direction of extension 100.

The cut-off 21 is inserted into an accommodation seat defined in the hollow valve body 11 and a portion thereof is coupled, by way of a screw/female thread engagement, with the inner surface of the accommodation seat.

In this manner, the rotation of the actuation body 23 about to the movement direction 101 determines an axial movement of the cut-off 21.

Preferably, the cut-off 21 comprises the cut-off of a valve of the type identified commercially with the wording KFE.

Conveniently, the filling and/or emptying opening 20 is associated with a collar 24 that is associable with a conduit for filling and/or draining and/or with a closure plug 25.

All the characteristics of the invention, indicated above as advantageous, convenient or similar, may also be missing or be substituted by equivalent characteristics.

The use of a flow control valve according to the invention is evident from the foregoing description.

The invention thus conceived is susceptible of numerous modifications and variations, all of which are within the scope of the appended claims.

In practice it has been found that in all the embodiments the invention has achieved the intended aim and objects.

In particular, integrating both the flow control valve 1 and the filling and/or emptying opening 20 with the corresponding cut-off 21 in the same hollow valve body 11 makes it possible to obtain an extremely compact structure and a considerable reduction in the costs, since a single body needs to be produced (and not two as in the solutions known today).

In addition, the costs of installation are reduced.

Finally, there is a greater ease of access, since the position of the cut-off is defined, compared to conventional valves in which the loading/draining valve is screwed along the conduit.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Utility Model Application No. 202016000083615 (UA2016U168572) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A flow control valve (1), comprising a hollow valve body (11) that extends along a main direction of extension (100) and has at least two open tubular portions (12, 13) for connection to a respective section of conduit, a flow control element (2) accommodated in said hollow valve body (11) and movable between at least one position for permitting flow and a position for stopping flow, and a first shank (3) for moving said flow control element (2) which can be actuated using an actuation element, **characterized in that** in said hollow valve body (11) at least one filling and/or emptying opening (20) is defined and is connected with the interior of the hollow valve body (11), and a cut-off (21) is accommodated which is adapted to open/close said at least one filling and/or emptying opening (20).

2. The flow control valve (1) according to claim 1, **characterized in that** said flow control element (2) comprises a hollow ball flow control element.

3. The flow control valve (1) according to one or more of the preceding claims, **characterized in that** said cut-off (21) is associated with an actuation body (23).

4. The flow control valve (1) according to one or more of the preceding claims, **characterized in that** said cut-off (21) can move along a movement direction (101) arranged substantially tangentially to the inner surface of said hollow valve body (11) and at right angles to said main direction of extension (100).

5. The flow control valve (1) according to one or more of the preceding claims, **characterized in that** said cut-off (21) comprises the cut-off of a KFE valve.

6. The flow control valve (1) according to one or more of the preceding claims, **characterized in that** said filling and/or emptying opening (20) is associated with a collar (24) that is associable with a conduit for filling and/or draining and/or with a closure plug (25).
